# EUROPÄISCHE PATENTANMELDUNG

(11) **EP 4 671 070 A1**
(43) Veröffentlichungstag der Anmeldung: **31.12.2025**
(21) Anmeldenummer: 25185275.2
(22) Anmeldetag: 25.06.2025
(51) Int. Cl.: B60W 30/18, B60W 50/00

(54) **VERFAHREN ZUM BERGEN EINES FAHRZEUGS BEI VERMINDERTEN HAFTUNGSVERHÄLTNISSEN EINES GELÄNDES UND EIN FAHRZEUG ZUR DURCHFÜHRUNG DIESES VERFAHRENS**

(30) Priorität: 26.06.2024 CZ 20240255
(71) Anmelder: Skoda Auto a.s., 293 01 Mladá Boleslav (CZ)
(72) Erfinder: Frcek, Tomás, 38501 Vimperk (CZ); Frýdek, Jáchym, 47201 Doksy (CZ); Kruta, Michal, 10400 Praha (CZ); Zdenek, Jan, 28802 Nymburk (CZ)

(57) **Zusammenfassung**

Der Gegenstand der Erfindung ist ein Verfahren zum Bergen eines Fahrzeugs (1) bei verminderten Haftungsverhältnissen eines Geländes (2), dadurch gekennzeichnet, dass es die Schritte der Detektion des Feststeckens des Fahrzeugs (1), der Detektion der Haftung zwischen der Oberfläche des Geländes (2) und mindestens einem Rad des Fahrzeugs (1), des Anfahrens des Fahrzeugs (1) in die erste Richtung (3) und des Anfahrens des Fahrzeugs (1) in die zweite Richtung (4) umfasst, wenn im Schritt des Anfahrens des Fahrzeugs (1) in die erste Richtung (3) kein Bergen erfolgt ist. Falls das Bergen des Fahrzeugs auch nach dem Anfahren des Fahrzeugs (1) in die zweite Richtung (4) nicht erfolgt ist, wiederholen sich der Schritt des Anfahrens des Fahrzeugs (1) in die erste Richtung (3) und der Schritt des Anfahrens des Fahrzeugs (1) in die zweite Richtung (4) wenigstens einmal. Das Anfahren des Fahrzeugs (1) in die erste Richtung (3) und das Anfahren in die zweite Richtung (4) hängen von der detektierten Haftung ab.

## Beschreibung

### Technisches Sachgebiet

Der Gegenstand der Erfindung ist ein Verfahren zum Bergen eines Fahrzeugs bei verminderten Haftungsverhältnissen eines Geländes und ein Fahrzeug mit einer Steuereinheit zur Durchführung dieses Verfahrens zum Bergen.

### Stand der Technik

Derzeit gibt es mehrere Möglichkeiten, wie ein festgestecktes Fahrzeug in einem Gelände bei verminderten Haftungsverhältnissen (z. B. im Sand, im Schlamm) zu befreien. Eine der gängigen Verfahren ist der Versuch, mit dem Fahrzeug so herauszufahren, dass der Fahrer die Vorwärtsfahrt und die Rückwärtsfahrt wechselt und damit das Fahrzeug langsam hin- und herschaukelt, bis es die erforderliche Geschwindigkeit erreicht und das Fahrzeug herausgeschleudert und geborgen wird. Alternativ kann der Fahrer das festgesteckte Rad teilweise abstützen, um die Traktion zu verbessern. Diese Verfahren zur Bergen des Fahrzeugs erfordern eine aktive Beteiligung mindestens einer Person und zudem sind diese Verfahren zur Bergen in hohem Maße vom Geschick, vom Gefühl und von der Erfahrung des Fahrers abhängig. Ein sensibles Anfahren mit einem starken Motor und einem Automatikgetriebe ist selbst für erfahrene Fahrer schwierig, und das Risiko, stecken zu bleiben, ist bei geringer Fahrbahnhaftung noch größer.

Ein anderes Verfahren zur Bergen bieten Fahrzeuge mit Bergungsfunktion, bei denen das Fahrzeug einen "Schwung" ausführt - eine schnelle Richtungsänderung vorwärts - rückwärts, ohne dass der Fahrer eingreifen muss. Dieses Verfahren zur Bergen ist beispielsweise in dem Dokument US20150291168A1 offenbart.

Ein wichtiger Faktor zum Bergen eines Fahrzeugs ist die unterschiedliche Haftung der Oberfläche des Geländes (Schnee, Eis, Schlamm, Sand, nasses Gras usw.). Jedes Gelände erfordert eine unterschiedliche Art, das Fahrzeug anzufahren. Während das Steckenbleiben im Sand ein gewisses Maß an Dynamik und Radschlupf erfordert, erfordert das Steckenbleiben auf Schnee und Eis einen sehr sanften Start an der Haftungsgrenze ohne Radschlupf.

Es wäre geeignet, eine Lösung zu finden, die ein schnelleres und einfacheres Bergen des Fahrzeugs bei unterschiedlicher und gleichzeitig reduzierter Haftung des Geländes ermöglicht.

### Zusammenfassung der Erfindung

Die oben genannten Mängel werden durch ein Verfahren zum Bergen eines Fahrzeugs bei verminderten Haftungsverhältnissen eines Geländes behoben, das die Schritte einer Detektion des Feststeckens des Fahrzeugs, einer Detektion der Haftung zwischen der Geländeoberfläche und mindestens einem Rad des Fahrzeugs, eines Anfahrens des Fahrzeugs in die erste Richtung und eines Anfahrens des Fahrzeugs in die zweite Richtung umfasst. Das Anfahren des Fahrzeugs in die erste Richtung und das Anfahren des Fahrzeugs in die zweite Richtung hängt von der im Schritt der Detektion der Haftung festgestellten Haftung ab. Der Schritt des Anfahrens des Fahrzeugs in die zweite Richtung erfolgt, wenn das Fahrzeug im Schritt des Anfahrens des Fahrzeugs in die erste Richtung nicht geborgen wird. Das Bergen des Fahrzeugs kann also im Schritt des Anfahrens des Fahrzeugs in die erste Richtung oder im Schritt des Anfahrens des Fahrzeugs in die zweite Richtung erfolgen. Wird das Fahrzeug auch nach dem Anfahren in die zweite Richtung nicht geborgen, so ist der Schritt des Anfahrens des Fahrzeugs in die erste Richtung mindestens einmal zu wiederholen und dann gegebenenfalls der Schritt des Anfahrens des Fahrzeugs in die zweite Richtung. Vorzugsweise werden diese beiden Schritte abwechselnd wiederholt, bis eine Bergung erfolgt oder eine vordefinierte Grenzanzahl von Schwingungen, z. B. 20, stattgefunden hat.

Dieses Verfahren zum Bergen ermöglicht eine effiziente und automatische Bergung des Fahrzeugs. Dank der Detektion der Haftung können die Fahrparameter an das Gelände angepasst werden. Das Anfahren in die erste Richtung und eventuell auch in die zweite Richtung wird somit dank der angepassten Fahrparameter auf der Grundlage des früheren Schritts der Detektion der Haftung an die Umgebungsbedingungen angepasst, und die Fahrzeugbergung selbst erfolgt schneller und effizienter.

Das Gelände mit verminderten Haftungsverhältnissen kann Sand, Schlamm, nasses Gras, Schnee, Eis usw. sein. Die geringe Haftung zwischen das Fahrzeugrad und dem Gelände kann dazu führen, dass das Fahrzeug stecken bleibt, und das Gelände verhindert, dass sich das Fahrzeug bei bestimmter Drehzahl der Antriebseinheit des Fahrzeugs bewegt.

Die Haftung wird vorzugsweise indirekt detektiert, d. h. durch Messung einer anderen Größe (oder mehrerer Größen). Der Grad der Haftung wird vorzugsweise durch das Drehmoment von der Antriebseinheit ausgedrückt. Alternativ kann zum Beispiel der Reibungskoeffizient des Geländes gemessen werden. Der Schritt der Detektion der Haftung kann das Anfahren des Fahrzeugs und das Erhöhen eines Moments von der Antriebseinheit des Fahrzeugs auf mindestens ein angetriebenes Rad des Fahrzeugs umfassen, um ein Maximalmoment für das Anfahren des Fahrzeugs in die erste Richtung und/oder das Anfahren des Fahrzeugs in die zweite Richtung zu erkennen. Das Maximalmoment wird erkannt, wenn die Geschwindigkeit des angetriebenen Fahrzeugrads die Geschwindigkeit des gezogenen Fahrzeugrads um einen vordefinierten Geschwindigkeitstoleranzwert überschreitet. Der vordefinierte Geschwindigkeitstoleranzwert beträgt vorzugsweise weniger als 1 km/h. Das Maximalmoment kann daher der Grenzwert des Moments sein, bei dem das Fahrzeug noch auf der Geländeoberfläche rollt, aber mindestens ein Rad des Fahrzeugs bereits rutscht, wenn das Moment erhöht wird. Das Anfahren des Fahrzeugs im Schritt der Detektion der Haftung kann als Durchdrehen mindestens eines Rades definiert werden. Das Fahrzeug muss keine Strecke zurücklegen, und das Durchrutschen der Räder, wenn das Fahrzeug ganz oder zumindest teilweise festsitzt, wird vorzugsweise als ein Schritt des Anfahrens des Fahrzeugs beim Schritt der Detektion der Haftung betrachtet.

Auf der Grundlage der Detektion der Haftung können verschiedene Fahrzeug- und Fahrparameter geändert werden. Vorzugsweise wird das maximale Drehmoment der Antriebseinheit des Fahrzeugs und gegebenenfalls der Verlauf (vorzugsweise der Anstieg) des Drehmoments von der Antriebseinheit des Fahrzeugs verändert. Darüber hinaus können die Motordrehzahl (vorzugsweise steigt die Motordrehzahl mit zunehmender Haftung zwischen Rad und Gelände), die Geschwindigkeit der Geschwindigkeit der Änderung der Drehzahl und/oder die Anfahrzeit des Fahrzeugs usw. verändert werden.

Vorzugsweise umfasst der Schritt des Anfahrens des Fahrzeugs in die erste Richtung und/oder in die zweite Richtung die Erhöhung des Moments der Antriebseinheit des Fahrzeugs auf ein Maximalmoment, vorzugsweise auf ein Maximalmoment mit einer Abweichung, die beispielsweise von der Geometrie der Radachse, der Übersetzung in der Lenkung usw. abhängen kann. Das Moment kann beim Anfahren des Fahrzeugs in die erste Richtung konstant sein, bevorzugter kann es sich ändern, z. B. kontinuierlich den Momentwert bis zum Maximalmoment erhöhen. Der Verlauf der Momentänderung hängt vorzugsweise von der detektierten Bodenhaftung ab, insbesondere vorzugsweise ist der Momentanstieg beim Anfahren umso geringer, je geringer die detektierte Haftung ist. Der zeitliche Verlauf des Moments kann vorzugsweise durch die Momentkurve der Antriebseinheit ausgedrückt werden. Bei der Durchführung des Verfahrens zum Bergen mit Hilfe von einem Fahrzeug kann das Fahrzeug dann z. B. mehrere Momentenkurven für verschiedene Oberflächen umfassen, die im Schritt der Detektion der Haftung erkannt wurden.

Vorzugsweise werden bei diesem Verfahren mindestens zwei Oberflächentypen unterschieden, wobei für mindestens einen der Oberflächentypen das Moment beim Anfahren des Fahrzeugs in die erste Richtung und/oder die zweite Richtung um ein vorgegebenes Inkrement (hier auch als Offset bezeichnet) über das erfasste Maximalmoment erhöht wird.

Bei diesen Oberflächentypen kann es sich z. B. um eine "Oberfläche mit Offset" und eine "Oberfläche ohne Offset" handeln, wobei sich diese Oberflächen durch den ermittelten Maximalmomentwert unterscheiden. Vorzugsweise sind die Oberflächen ohne Offset mehr glatt und die Oberflächen mit Offset sind weniger glatt.

Dieses vordefinierte Inkrement führt also dazu, dass der Versuch um Anfahren vorwärts oder rückwärts mit einem größeren Momentanstieg durchgeführt wird, der über dem Grenzwert liegt, bei dem der Schlupf bei der Detektion der Haftung aufgetreten ist. Für manche Oberflächen, insbesondere Sand oder sogar Schlamm, ist dieses erhöhte Moment, vorzugsweise mit einem steileren Anstieg des Moments, besser geeignet, um das Fahrzeug auszuschwenken. Bei Schlamm kann es davon abhängen, um welche Art von Schlamm es sich handelt - z. B. in Bezug auf den Wassergehalt, die Glätte (z. B. ist Ton glatter als Lehm) usw.

Das erfindungsgemäße Verfahren kann auch detailliertere Geländekategorien als nur die oben genannten Typen mit und ohne Offset unterscheiden. Die Kategorie kann zum Beispiel benutzerdefiniert sein.

Vorzugsweise wird für mindestens eine andere Art von Oberfläche das Moment nicht um ein vordefiniertes Inkrement über das festgestellte Maximalmoment hinaus erhöht. Bei manchen Oberflächen, wie z. B. Schnee, Eis oder nasses Gras, könnte andererseits eine Erhöhung des Moments beim Anfahren über das festgelegte Maximalmoment hinaus die Wahrscheinlichkeit des Bergens verringern. Bei einigen Oberflächen ist es daher wünschenswert, nur das ermittelte Maximalmoment zu erreichen und dieses nicht zu überschreiten.

Vorzugsweise ist bei Oberflächentypen, bei denen das Moment um ein vordefiniertes Inkrement erhöht wird, das ermittelte Maximalmoment höher und der Momentanstieg im Anfahrschritt steiler ist als bei Oberflächentypen, bei denen das Moment nicht um ein vordefiniertes Inkrement erhöht wird. Wie bereits oben erwähnt, haben Gelände mit Offset daher vorzugsweise ein höheres ermitteltes Moment und einen steileren Momentanstieg beim Anfahren. Diese Vorgehensweise erhöht die Chancen auf eine erfolgreiche Bergung.

Der Wert des vordefinierten Inkrements ist vorzugsweise eine Funktion des ermittelten Maximalmoments. Zum Beispiel handelt es sich um 5 % bis 40 % des ermittelten Maximalmoments, vorzugsweise handelt es sich um 15 % bis 40 %. Alternativ kann das Offset zum Beispiel ein konstanter Wert sein, z. B. 5-20 Nm Momentinkrement vom Motor (der Momentwert an den Rädern ist natürlich je nach Getriebe und Radgröße unterschiedlich), oder es kann sich um unterschiedliche Konstanten für verschiedene Gelände handeln, d. h. ein anderes konstantes Offset für Sand und ein anderes für Schlamm usw. Die spezifischen Offset-Werte, ob konstant oder abhängig vom erfassten Moment, können von Fahrzeug zu Fahrzeug variieren, z. B. auch in Bezug auf Radgröße, Reifentyp usw. Die spezifischen geeigneten Offset-Werte können somit experimentell für einen bestimmten Fahrzeugtyp bestimmt werden, z. B. zusammen mit der Anzahl der Versuche, vorwärts oder rückwärts anzufahren, der Steilheit des Momentanstiegs usw.

Das erfindungsgemäße Verfahren kann in Übereinstimmung mit den üblichen elektronischen Fahrzeugassistenzsystemen arbeiten, wie z. B.: ESC (Electronic Stability Control), EDS (Elektronische Differenzialsperre), Emergency Brake, Park Asisst, oder PDC (Park Distance Control), die die Funktionsweise der Erfindung verfeinern können. Im Hinblick auf die Verwendung des Offsets in der vorliegenden Erfindung gilt allgemein, dass es auf Oberflächen mit geringer Haftung wie Schnee, Eis, Schlamm und nasses Gras besser ist, mit einem möglichst geringen Radmoment und ohne Schlupf der Räder der angetriebenen Achse und mit einer möglichst geringen Dynamik zu arbeiten, während es auf Gelände mit höherer Haftung wie Sand besser ist, einen gewissen Schlupf der Räder der angetriebenen Achse zuzulassen und die Dynamik der Richtungsänderungen und des Drehmomentanlaufs der angetriebenen Räder zu erhöhen.

Bei einem Richtungswechsel werden die Bremssysteme des Fahrzeugs vorteilhaft genutzt, um die Räder während des Richtungswechsels abzubremsen und eine ungewollte Fahrzeugbewegung zu verhindern.

Vorteilhafterweise sind im aktiven Betrieb der Erfindung auch alle Sicherheitsassistenten in Betrieb, um zu verhindern, dass das Fahrzeug während des Bergungsmanövers mit Fremdkörpern kollidiert. Sind diese Systeme aktiv oder betätigt der Fahrer das Bremspedal, wird der Vorgang vorzugsweise sofort abgebrochen und muss gegebenenfalls vom Fahrer neu gestartet werden.

Bei Doppelkupplungsgetrieben für Verbrennungsmotoren werden die Gänge 1 und R während des aktiven Betriebs der Erfindung gleichzeitig eingelegt (die Konstruktion des Getriebes lässt dies zu), und der Wechsel der Bewegungsrichtung erfolgt durch Schalten der einen oder anderen Kupplung des Getriebes.

Der Schritt des Anfahrens des Fahrzeugs in die erste Richtung und der Schritt des Anfahrens des Fahrzeugs in die zweite Richtung umfassen vorzugsweise eine Detektion der Geschwindigkeit des angetriebenen Rads und eine Detektion der Geschwindigkeit des gezogenen Rads. Mit Hilfe von der Detektion der Geschwindigkeit der Räder während der Bergung kann der Stand des Fahrzeugs ermittelt werden, ob das Fahrzeug geborgen wird oder nicht, ob das Fahrzeug bereits geborgen wurde usw. Auch andere Fahrzeugparameter, wie die Position des Fahrzeugs, können gemessen werden, um den Stand der Bergung zu bestimmen.

Das Maximalmoment im Schritt des Anfahrens des Fahrzeugs in die erste Richtung und/oder im Schritt des Anfahrens des Fahrzeugs in die zweite Richtung kann um ein Offset erhöht werden, das ist um das Inkrement des Moments von der Antriebseinheit in Abhängigkeit von der detektierten Haftung. Vorzugsweise kann das detektierte Maximalmoment von der Antriebseinheit auf das Rad um das Inkrement des Moments von der Antriebseinheit in Abhängigkeit vom Wert des erfassten Maximalmoments erhöht werden. Vorzugsweise wird der Offset-Wert für jeden Geländetyp experimentell ermittelt, zum Beispiel kann das Offset beim detektierten Geländeoberflächentyp, der dem Schnee und Eis entspricht, gleich Null sein, auf Sand kann das Offset größer sein als auf nassem Gras usw.

Das Offset ist die Abweichung, um die der im Schritt der Detektion der Haftung ermittelte Parameter für die Haftung des Geländes erhöht (oder verringert) werden kann. Vorzugsweise kann dieser Parameter das Inkrement des Drehmoments von der Antriebseinheit sein, wenn die ermittelte Haftung durch das maximale Drehmoment von der Antriebseinheit ausgedrückt wird, bei dem die Fahrzeugräder noch auf der Oberfläche des Geländes rollen. Das Offset kann im Schritt des Anfahrens in die erste Richtung und/oder im Schritt des Anfahrens in die zweite Richtung hinzugefügt werden. Das Offset kann bei der ersten Durchführung des Schritts des Anfahrens in die erste Richtung und/oder des Schritts des Anfahrens in die zweite Richtung und/oder nach mehreren Durchführungen dieser Schritte hinzugefügt werden, wenn das Fahrzeug sog. schwankt (abwechselnd schnelle Bewegung in die erste und zweite Richtung). Der Wert des Offsets kann variieren, je nachdem, ob er im Schritt des Anfahrens in die erste Richtung und/oder im Schritt des Anfahrens in die zweite Richtung hinzugefügt wird, wievielmal der Schritt oder die Schritte wiederholt wurden, welchen Wert die ermittelte Haftung hat usw. Durch Hinzufügen eines Offsets zum Parameter der detektierten Haftung kann das Fahrzeug schneller und effizienter geborgen werden.

Unter Verwendung der Überwachung der Geschwindigkeiten des angetriebenen Rades und des gezogenen Rades kann das Anfahren des Fahrzeugs in die erste Richtung so verlaufen, indem das Fahrzeug mit bestimmten Parametern (z.B. abhängig von dem im vorherigen Schritt erfassten Momentverlauf des Motors) angefahren wird und (z.B. automatisch durch die Steuereinheit des Fahrzeugs) überwacht wird, ob die Geschwindigkeit des angetriebenen Rades größer als der vordefinierte Wert v_{H1} ist und gleichzeitig, ob die Geschwindigkeit des gezogenen Rades gleich oder kleiner als der vordefinierte Geschwindigkeitswert v_{T1} ist. Ist dies der Fall, wird das Fahrzeug abgebremst und dann kann der Schritt des Anfahrens des Fahrzeugs in die zweite Richtung folgen. Alternativ kann das Verfahren zum Bergen abgeschlossen werden, z. B. bereits beim einige Male wiederholten Zyklus des Abwechselns des Anfahrens in die erste Richtung und des Anfahrens in die zweite Richtung, während der das Bergen nicht stattgefunden hat. Alternativ kann wiederholt die Detektion der Haftung erfolgen und/oder die Fahrbedingungen können sich ändern, zum Beispiel kann sich das vom Motor auf die angetriebenen Räder übertragene Moment ändern. Vorzugsweise ist v_{H1} mindestens viermal so groß wie v_{T1}, so dass das Fahrzeug automatisch detektieren kann, ob die Räder bereits durchdrehen und die Bewegung des Fahrzeugs in die gegebene Richtung für das Bergen nicht mehr sinnvoll ist. Wenn die vorgenannte Bedingung mit der Geschwindigkeit des angetriebenen Rades und der Geschwindigkeit des gezogenen Rades nicht erfüllt ist, kann das Fahrzeug in dieser Richtung weiterfahren. Wenn die Geschwindigkeit des gezogenen Rades gleich oder größer als die vordefinierte Geschwindigkeit v_{U} ist, kann das Fahrzeug bereits geborgen sein und das endgültige Anfahren in die erste Richtung kann erfolgen. Vorzugsweise ist v_{U} mindestens 10-mal größer als v_{T1}. Die vordefinierten Geschwindigkeiten v_{H1}, v_{T1}, v_{U} können durch Berechnungen und/oder Experimente ermittelt werden und können für ein bestimmtes Fahrzeugmodell und einen bestimmten Fahrzeugtyp, eine bestimmte Fahrzeugausstattung usw. variieren. Vorzugsweise variieren diese Geschwindigkeiten in Abhängigkeit von der detektierten Haftung zwischen dem Fahrzeugrad und dem Gelände. Das Experiment zur Ermittlung der vorgegebenen Geschwindigkeiten kann beispielsweise durchgeführt werden, indem das Fahrzeug in einem Schlagloch eingeklemmt wird und die Geschwindigkeiten gemessen werden, bei denen das Fahrzeug geborgen wird oder geborgen ist.

Unter Verwendung der Überwachung der Geschwindigkeiten des angetriebenen Rades und des gezogenen Rades kann das Anfahren des Fahrzeugs in die zweite Richtung so verlaufen, indem das Fahrzeug mit bestimmten Parametern (z.B. abhängig von dem im vorherigen Schritt der Detektion der Haftung erfassten Momentverlauf des Motors) angefahren wird und (z.B. automatisch durch die Steuereinheit des Fahrzeugs) überwacht wird, ob die Geschwindigkeit des angetriebenen Rades größer als der vordefinierte Wert v_{H2} ist und gleichzeitig, ob die Geschwindigkeit des gezogenen Rades gleich oder kleiner als der vordefinierte Geschwindigkeitswert v_{T2} ist. Ist dies der Fall, wird das Fahrzeug abgebremst und dann kann der Schritt des Anfahrens des Fahrzeugs in die erste Richtung folgen. Alternativ kann das Verfahren zum Bergen abgeschlossen werden, z. B. bereits beim einige Male wiederholten Zyklus des Abwechselns des Anfahrens in die erste Richtung und des Anfahrens in die zweite Richtung, während der das Bergen nicht stattgefunden hat. Alternativ kann wiederholt die Detektion der Haftung erfolgen und/oder die Fahrbedingungen können sich ändern, zum Beispiel kann sich das vom Motor auf die angetriebenen Räder übertragene Moment ändern. Vorzugsweise ist v_{H2} mindestens viermal so groß wie v_{T2}, so dass das Fahrzeug automatisch detektieren kann, ob die Räder bereits durchdrehen und die Bewegung des Fahrzeugs in die gegebene Richtung für das Bergen nicht mehr sinnvoll ist. Die vordefinierte Geschwindigkeit v_{H1} kann mit v_{H2} übereinstimmen, v_{T1} kann mit v_{T2} übereinstimmen. Wenn die oben genannte Bedingung mit der Geschwindigkeit des angetriebenen Rades und der Geschwindigkeit des gezogenen Rades nicht erfüllt ist und gleichzeitig, wenn Geschwindigkeit des gezogenen Rades gleich oder größer als v_{U} ist, kann das Fahrzeug bereits geborgen sein und das endgültige Anfahren in die erste Richtung kann erfolgen.

Der Schritt der Detektion des Feststeckens kann die Messung der Geschwindigkeit mindestens eines angetriebenen Rades und der Geschwindigkeit mindestens eines gezogenen Rades umfassen. Das Feststecken wird erkannt, wenn die Geschwindigkeit des angetriebenen Rads des Fahrzeugs die Geschwindigkeit des gezogenen Rads des Fahrzeugs um eine vordefinierte Geschwindigkeitsabweichung überschreitet. Diese vordefinierte Geschwindigkeitsabweichung kann zum Beispiel für einen bestimmten Fahrzeugtyp, ein bestimmtes Modell usw. experimentell ermittelt werden. Um ein festgestecktes Fahrzeug zu detektieren, kann beispielsweise die Geschwindigkeit des angetriebenen Rades mindestens das Vierfache der Geschwindigkeit des gezogenen Rades betragen. Der Schritt der Detektion des Feststeckens des Fahrzeugs kann die Einschaltung eines Schalters zur Aktivierung der Bergung umfassen, der sich z. B. an einer Mittelkonsole im Innenraum des Fahrzeugs befinden kann. Das Feststecken kann so detektiert werden, dass der Fahrer bei Bedarf die Taste zum Bergen drückt. Außerdem kann das Feststecken zum Beispiel an der Position des Fahrzeugs erkannt werden, wenn das Fahrzeug eine bestimmte Zeit lang an einer Stelle stehen bleibt, auch wenn das Gaspedal betätigt wird, ohne dass das Fahrzeug durch die Handbremse gebremst wird, mithilfe von der Beschleunigung des Fahrzeugs usw.

Der Schritt der Detektion des Feststeckens kann beim Anfahren in die erste Richtung oder beim Anfahren in die zweite Richtung erkannt werden.

Die erste Richtung kann die durch Vorwärts- oder Rückwärtsfahrt vorgegebene Richtung sein. Die zweite Richtung ist die Umkehrung der Vorwärtsrichtung - d. h. wenn die erste Richtung durch die Vorwärtsfahrt des Fahrzeugs bestimmt wird, ist die zweite Richtung die Rückwärtsfahrt und umgekehrt.

Das Verfahren zum Bergen kann den Schritt der Anforderung der Bestätigung zur Einleitung der Fahrzeugbergung umfassen, der auf den Schritt der Detektion des Feststeckens des Fahrzeugs folgen und dem Schritt der Detektion der Haftung vorausgehen kann. Der Schritt des Anforderns einer Bestätigung kann die Indikation des Feststeckens umfassen, wobei der Fahrer über das Mitteldisplay darüber informiert werden kann, dass das Fahrzeug feststeckt, und dann kann er die Kontrolle der Bremsen umfassen, um festzustellen, ob das Fahrzeug gebremst ist, weiterhin das Anfordern der Bestätigung der Aktivierung des Bergungsverfahrens (z. B. durch Drücken einer Taste und/oder Betätigung des Brems-/Gaspedals usw.).

Darüber hinaus kann das Verfahren zum Bergen einen Algorithmus für eine schnellere und sanftere Änderung der Geschwindigkeitsbewegung umfassen, wenn das Fahrzeug vom Anfahren in die erste Richtung zum Anfahren in die zweite Richtung und umgekehrt wechselt. Dieser Algorithmus unterscheidet sich vorzugsweise je nach Ausstattung des Fahrzeugs (Elektrofahrzeug, Fahrzeug mit Automatikgetriebe usw.). Vorzugsweise wird dieser Algorithmus vor dem Schritt der Detektion der Haftung durchgeführt. Darüber hinaus kann das Verfahren zum Bergen einen Algorithmus umfassen, der das Anfahren des Fahrzeugs so anpasst, dass es sanft oder sehr schnell anfährt, nachdem eine Haftung zwischen dem Rad und dem Gelände festgestellt wurde. Vorzugsweise wird dieser Algorithmus vor dem Schritt der Detektion der Haftung durchgeführt.

Bei Fahrzeugen mit Allradantrieb kann das Verfahren z. B. vorsehen, wenn nach einer bestimmten Zeit oder nach einer bestimmten Anzahl von Richtungswechseln keine Bergung erfolgt oder wenn der Fahrer nach eigenem Ermessen entscheidet, die Änderung dessen, welche Achse während des Bergungsversuchs angetrieben wird, d. h. welche Räder angetrieben werden. So kann das Fahrzeug beispielsweise versuchen, sich durch den Antrieb der Vorderräder zu bergen, und wenn dies nicht gelingt, versuchen, sich durch den Antrieb der Hinterräder zu bergen, und erst dann könnte das Verfahren erfolglos enden.

Darüber hinaus werden die oben genannten Mängel bis zu einem gewissen Grad durch ein Fahrzeug beseitigt, das eine Antriebseinheit, mindestens ein angetriebenes Rad, mindestens ein gezogenes Rad und eine Steuereinheit umfasst. Die Antriebseinheit treibt jedes angetriebene Rad an. Ein gezogenes Rad ist also ein Rad, das nicht direkt mit der Antriebseinheit verbunden ist oder in einem bestimmten Schritt des Bergungsverfahrens nicht von der Antriebseinheit angetrieben wird. Das gezogene Rad kann also auch ein Rad sein, das im normalen Fahrzeugbetrieb mit der Antriebseinheit verbunden ist. Zum Beispiel nur während der Durchführung des Verfahrens zum Bergen wird die Verbindung mit der Antriebseinheit unterbrochen (z. B. bei einem Fahrzeug mit Allradantrieb).

Die Antriebseinheit kann ein Verbrennungsmotor, ein Elektromotor, eine Batterie usw. sein. Die Antriebseinheit ist mit der Steuereinheit datenverbunden (vorzugsweise verdrahtet). Die Steuereinheit dient dazu, die Bergung des Fahrzeugs gemäß dem Verfahren zum Bergen des Fahrzeugs zu steuern. Bei der Steuereinheit kann es sich um eine Steuereinheit handeln, die bereits ab Werk zum Lieferumfang des Fahrzeugs gehört und ein Programm zur Steuerung des Verfahrens zum Bergen umfasst, oder kann diese Steuereinheit ein eigenständiges Gerät zur Steuerung der Bergung sein. Vorzugsweise steuert die Steuereinheit automatisch alle Schritte des Verfahrens zum Bergen so, dass zum Beispiel der Fahrer des Fahrzeuges nur die gewünschte Fahrtrichtung des Fahrzeugs nach der Bergung eingibt und das Starten der Funktion (zum Beispiel auf dem Armaturenbrett) bestätigt. Vorzugsweise kontrolliert die Steuereinheit die Bedingungen zur Detektion des Feststeckens im Verlaufe der gesamten Fahrt des Fahrzeugs, um automatisch das Feststecken des Fahrzeugs festzustellen und dem Fahrer das Starten der Funktion zur Bergung des Fahrzeugs anzubieten. Alternativ kann der Fahrer zuerst der Steuereinheit das Feststecken des Fahrzeugs (zum Beispiel mit Hilfe von einer Taste) bekanntgeben und anschließend kann die Steuereinheit den Schritt der Detektion des Feststeckens des Fahrzeugs zur Bestätigung des Feststeckens starten. Dank der Steuereinheit kann das gesamte Verfahren zum Bergen, bzw. ein Teil des Verfahrens, völlig automatisch verlaufen und somit erleichtert sie dem Fahrer die Arbeiten mit dem festgesteckten Fahrzeug. Gleichzeitig ist eine präzisere Bedienung des Fahrzeugs möglich, als wenn zum Beispiel das Anfahren in die erste Richtung, das Anfahren in die zweite Richtung und den Übergang dazwischen der Fahrer tun würde, wodurch die Bergung schneller, effizienter und schonender für das Fahrzeug ist.

Weiterhin kann das Fahrzeug standardmäßige Bestandteile eines Fahrzeugs umfassen - Karosserie, Scheinwerfer, Windschutzscheibe und Heckscheibe, Getriebe usw.

Vorzugsweise umfasst das Fahrzeug eine elektronische Differentialsperre (EDS-Funktion), die mit dem Verfahren zum Bergen für eine leichtere und schnellere Ausführung des Verfahrens zum Bergen verbunden ist. Die Steuereinheit für die EDS-Funktion kann mit der Steuereinheit für die Ausführung des Verfahrens zum Bergen datenverbunden sein. Alternativ kann das Fahrzeug eine Steuereinheit umfassen, die für die EDS- Funktion und gleichzeitig für die Ausführung des Verfahrens zum Bergen angepasst ist.

Vorzugsweise umfasst das Fahrzeug ein elektronisches Stabilitätsprogramm (ESP-Funktion), das mit dem Verfahren zum Bergen für die Überwachung der Räder und Bedienung des Systems der Steuerung des Fahrzeugs verbunden ist. Die Steuereinheit für das ESP-System kann mit der Steuereinheit für die Ausführung des Verfahrens zum Bergen datenverbunden sein. Alternativ kann das Fahrzeug eine Steuereinheit umfassen, die für das ESP- System und gleichzeitig für die Ausführung des Verfahrens zum Bergen angepasst ist.

Vorzugsweise umfasst das Fahrzeug sowohl die ESP- als auch die EDS-Funktion. Vorzugsweise werden beide Funktionen von einer gemeinsamen Steuereinheit gesteuert.

### Erklärung von Zeichnungen

Das Wesen der Erfindung wird weiterhin anhand von Ausführungsbeispielen erklärt, die mit Hilfe von beigefügten Zeichnungen beschrieben werden, die zeigen:
Fig. 1 ein Flussdiagramm des Verfahrens zum Bergen eines Fahrzeugs gemäß dem ersten Ausführungsbeispiel
Fig. 2 ein Flussdiagramm des Schritts der Detektion des Feststeckens des Fahrzeugs,
Fig. 3 ein Flussdiagramm des Schritts der Anforderung der Bestätigung zur Einleitung der Fahrzeugbergung,
Fig. 4 ein Flussdiagramm des Schritts der Detektion der Haftung,
Fig. 5 ein Flussdiagramm des Schritts des Anfahrens des Fahrzeugs in die erste Richtung,
Fig. 6 ein Flussdiagramm des Schritts des Anfahrens des Fahrzeugs in die zweite Richtung,
Fig. 7 eine Darstellung eines Fahrzeugs, das durch eine verminderte Haftung zwischen dem Gelände und dem Rad des Fahrzeugs festgesteckt ist,
Fig. 8 eine Darstellung eines Rads beim Schritt des Anfahrens des Fahrzeugs in die erste Richtung,
Fig. 9 eine Darstellung eines Rads beim Schritt des Anfahrens des Fahrzeugs in die zweite Richtung,
Fig. 10 ein Schema der Verbindung der Steuereinheit und der Antriebseinheit mit Rädern.
Fig. 11 eine graphische Darstellung der Steigerung des Moments für eine Oberfläche, wo Offset verwendet wird, und für eine Oberfläche, wo kein Offset verwendet wird.

### Ausführungsbeispiele der Erfindung

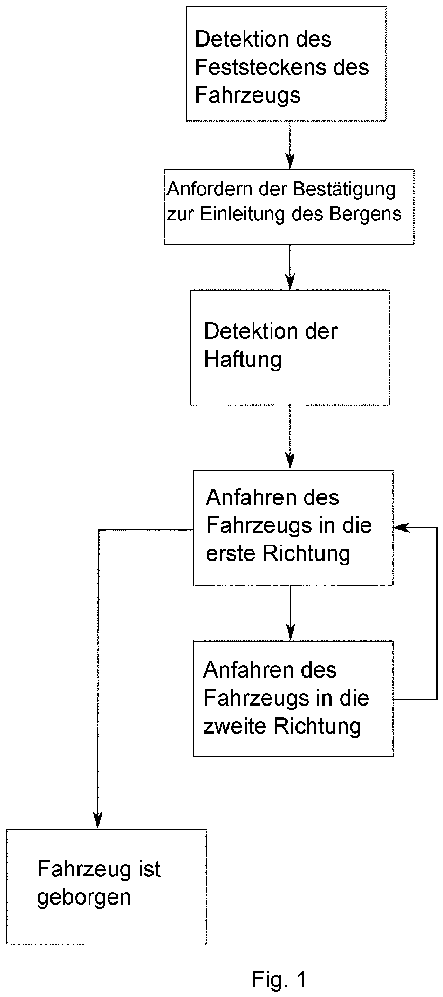

Das Verfahren zum Bergen eines Fahrzeugs 1 wird weiterhin anhand von Ausführungsbeispielen unter Bezugnahme auf die entsprechenden Zeichnungen näher erläutert. Eine erste beispielhafte Ausführung ist in den Fig. 1 bis 6 dargestellt.

Das Verfahren zum Bergen eines Fahrzeugs 1 bei verminderten Haftungsverhältnissen der Oberfläche des Geländes 2 im ersten Ausführungsbeispiel umfasst die Schritte einer Detektion des Feststeckens des Fahrzeugs 1, einer Anforderung der Bestätigung zur Einleitung der Fahrzeugbergung 1, einer Detektion der Haftung, eines Anfahrens des Fahrzeugs 1 in die erste Richtung 3 und eines Anfahrens des Fahrzeugs 1 in die zweite Richtung 4, wie in der Figur 1 dargestellt ist.

### DETEKTION DES FESTSTECKENS UND ANFORDERN DER BESTÄTIGUNG:

Der Schritt der Detektion des Feststeckens dient dazu, ein Feststecken des Fahrzeugs 1 zu erkennen, und umfasst das Anfahren des Fahrzeugs 1, wobei das Fahrzeug 1 die Geschwindigkeit der Räder mithilfe der Radsensoren und der Steuereinheit 8 überprüft. Anhand dieser Geschwindigkeiten wird festgestellt, ob das Fahrzeug 1 feststeckt und das Verfahren zum Bergen mit weiteren Schritten fortgesetzt oder das Verfahren zum Bergen abgebrochen oder die Radgeschwindigkeiten erneut überprüft werden.

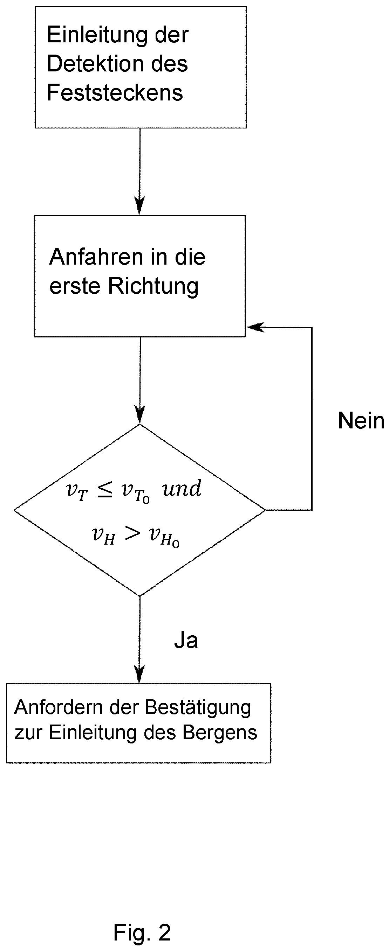

Der Schritt der Detektion des Feststeckens des Fahrzeugs 1 in der ersten beispielhaften Ausführung umfasst das Anfahren des Fahrzeugs 1 in der vom Fahrer des Fahrzeugs 1 gewünschten Fahrtrichtung. Der Ablauf dieses Schritts gemäß der ersten beispielhaften Ausführung ist in der Figur 2 dargestellt. In der ersten beispielhaften Ausführung fährt das Fahrzeug 1 während des Schritts der Detektion in die erste Richtung 3, diese ist die Richtung nach vorne. Somit ist die zweite Richtung 4 in der ersten beispielhaften Ausführung die Rückwärtsrichtung, wenn das Fahrzeug 1 rückwärtsfährt. Das Feststecken des Fahrzeugs 1 ist dadurch definiert, dass sich mindestens ein angetriebenes Rad 5 des Fahrzeugs 1 dreht und das gezogene Rad 6 sich nicht dreht oder dreht sich mit einer geringeren Geschwindigkeit als das angetriebene Rad 5. In der ersten beispielhaften Ausführung wird verfolgt, ob das mindestens eine gezogene Rad 6 eine Drehgeschwindigkeit v_{T} hat, die gleich oder kleiner ist als die Geschwindigkeit v_{T0}, die in der ersten beispielhaften Ausführung 0,5 km/h beträgt, und ob das mindestens eine angetriebene Rad 5 eine Drehgeschwindigkeit v_{H} hat, die größer ist als die Geschwindigkeit v_{H0}, die in der ersten beispielhaften Ausführung 3 km/h beträgt. Wenn diese Bedingung der Geschwindigkeit erfüllt ist, wird ein Feststecken detektiert, und dann folgt der nächste Schritt der Anforderung der Bestätigung zur Einleitung der Fahrzeugbergung 1. Sind diese Bedingungen nicht erfüllt, wird das Feststecken des Fahrzeugs 1 nicht automatisch ausgewertet und danach wird die Radgeschwindigkeit von Fahrzeug 1 erneut gemessen. Mit anderen Worten, die Detektion des Feststeckens kann also vom Anfahren des Fahrzeugs 1 bis zum Ende der Fahrt des Fahrzeugs 1 kontinuierlich erfolgen.

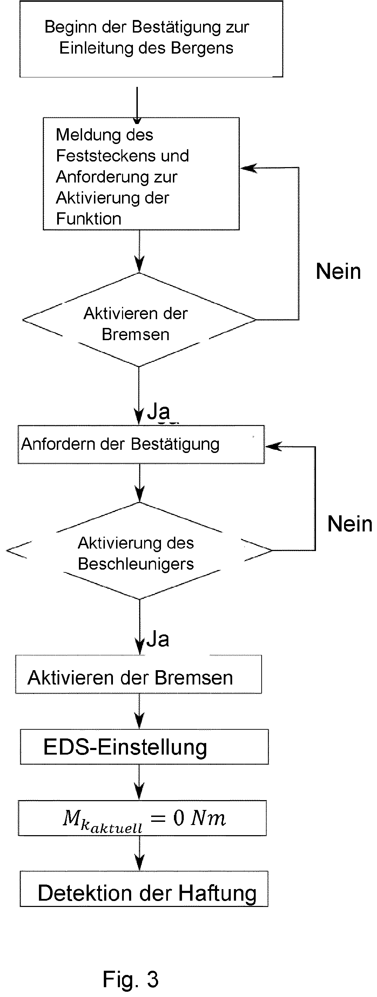

Bei einem positiven Abschluss des Schritts der Detektion des Feststeckens in der ersten beispielhaften Ausführung folgt der Schritt der Anforderung der Bestätigung zur Einleitung der Fahrzeugbergung 1, dessen Ablauf in der Figur 3 dargestellt ist. Der Schritt der Anforderung der Bestätigung zur Einleitung der Bergung dient dazu, sich zu vergewissern, ob das Fahrzeug 1 feststeckt und der Fahrer die Bergung des Fahrzeugs wünscht - d. h., dass mit dem Bergungsverfahren fortgesetzt werden soll. Zunächst wird dem Fahrer im Fahrzeug 1 die Detektion des Feststeckens des Fahrzeugs 1 signalisiert, und eine erste Bestätigung des Fahrers ist erforderlich, um die weiteren notwendigen Schritte zur Durchführung des Verfahrens zum Bergen durchzuführen. In der ersten beispielhaften Ausführung erfolgt die erste Bestätigung durch Betätigung der Bremse - durch kurzes Niedertreten des Bremspedals.

Bei Nichtbestätigung innerhalb eines bestimmten Zeitintervalls (hier in Zehntelsekunden) wird das Feststecken des Fahrzeugs 1 erneut signalisiert und die erste Bestätigung erneut angefordert. Bestätigt der Fahrer auch dann nicht die Ausführung der nächsten Schritte des Verfahrens zum Bergen, werden die nächsten Schritte des Verfahrens zum Bergen nicht ausgeführt. Zur Erhöhung der Sicherheit gegen unbeabsichtigte Ausführung der weiteren Schritte des Verfahrens zum Bergen ist nach der ersten Bestätigung eine zweite Bestätigung erforderlich, um das Verfahren zum Bergen auszuführen. In der ersten beispielhaften Ausführung wird für die zweite Bestätigung gefordert, dass der Fahrer das Gaspedal durch kurzes Niedertreten des Gaspedals des Fahrzeugs 1 betätigt. Wenn der Fahrer nicht innerhalb einer bestimmten Zeitspanne eine zweite Bestätigung vornimmt, wird die Aufforderung zur zweiten Bestätigung erneut signalisiert. Bestätigt der Fahrer auch dann nicht die Ausführung der nächsten Schritte des Verfahrens zum Bergen, werden die nächsten Schritte des Verfahrens zum Bergen nicht ausgeführt.

Nach der zweiten Bestätigung erfolgt die Abbremsung des Fahrzeugs 1 und die Einstellung der Werte der elektronischen Differenzialsperre (EDS), die die Ausführung des Verfahrens zum Bergen in der Steuereinheit 8 des Fahrzeugs 1 erleichtern sollen. Außerdem wird das Moment der Antriebseinheit 7 *M_{kₐₖₜᵤₑₗₗ}* auf 0 Nm (mit einer gewissen Toleranz in Zehntel-Nm) eingestellt, um den Leerlaufzustand des Fahrzeugs 1 zu gewährleisten. Nach der Einstellung des Moments folgt der Schritt der Detektion der Haftung.

### DETEKTION DER HAFTUNG:

Der Schritt der Detektion der Haftung dient dazu, die Oberfläche des Geländes 2 und deren Haftung zu bestimmen, auf der das Fahrzeug 1 feststeckt. Dieser Schritt umfasst das Anfahren des Fahrzeugs 1 in eine bestimmte Richtung, in der die Geschwindigkeiten der Räder und das Drehmoment der Antriebseinheit gemessen werden. Diese Parameter dienen zur Ermittlung, bei welchem Moment von der Antriebseinheit die Räder nicht mehr auf der Oberfläche des Geländes 2 abrollen, sondern zu rutschen beginnen, so dass dieses Moment in den nächsten Schritten des Verfahrens zum Bergen verwendet werden kann.

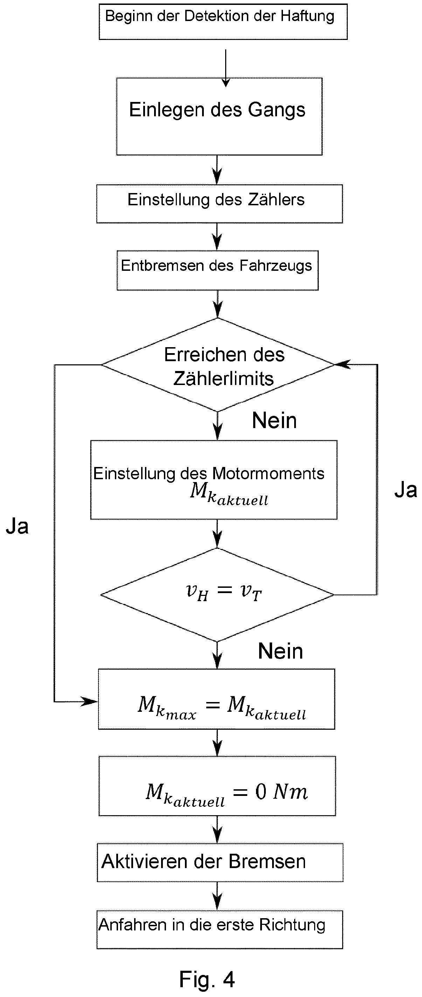

Der Schritt der Detektion der Haftung zwischen der Oberfläche des Geländes 2 und mindestens einem Rad des Fahrzeugs 1 ist in der Figur 4 dargestellt. Der Schritt der Detektion der Haftung umfasst zunächst das Einlegen der inversen Geschwindigkeitsstufe zum Anfahren in die zweite Richtung 4. Weiterhin werden die Zähler der Bewegungsstrecke in der inversen Richtung zurückgesetzt, um Informationen über die Bewegung in der zweiten Richtung 4 zu erhalten. Die Wegstrecke, die im ersten Ausführungsbeispiel vom Zähler erfasst wird, ist durch die Zeit der Bewegung in der zweiten Bewegungsrichtung 4 gegeben. Das Fahrzeug 1 wird abgebremst und anschließend fährt das Fahrzeug 1 in die zweite Richtung 4 an, wobei das Moment von der Antriebseinheit 7 des Fahrzeugs 1 *M_{kₐₖₜᵤₑₗₗ}* auf die angetriebenen Räder 5 kontinuierlich erhöht wird. Vor der Erhöhung des Moments *M_{kₐₖₜᵤₑₗₗ}* von der Antriebseinheit 7 wird die Kontrolle des Zählers durchgeführt, ob der maximale Kontrollsollwert bereits erreicht ist - in der ersten beispielhaften Ausführung, ob die maximale Strecke bereits zurückgelegt wurde.

Ist die maximale Strecke noch nicht zurückgelegt, wird der Zyklus mit der Erhöhung des Moments *M_{kₐₖₜᵤₑₗₗ}* von der Antriebseinheit 7 und der Kontrolle des Schlupfs der angetriebenen Räder 5 fortgesetzt (siehe Absatz unten). Wenn die maximale Strecke zurückgelegt ist, wird die Bewegungsrichtung des Fahrzeugs 1 in die erste Richtung 3 geändert und das Fahrzeug 1 wird in der ersten Richtung 3 in Bewegung gesetzt (mit einem geringeren Drehmoment *M_{kₐₖₜᵤₑₗₗ},* als beim normalen Anfahren), um sich ungefähr um die gleiche Strecke zu bewegen, die es in der zweiten Richtung 4 zurückgelegt hat. Dieser Schritt dient zur Überprüfung des Fahrzeugs 1, dass es nicht zu weit in die zweite Richtung 4 fährt, wenn eine Haftung erkannt wird, was gefährlich sein könnte (z. B. wenn die Haftung nicht schnell erkannt werden kann). Der Verlauf des Anstiegs des Moments *M_{kₐₖₜᵤₑₗₗ}* von der Antriebseinheit 7 des Anfahrens hat einen milderen Verlauf (d.h. das Moment steigt langsamer oder um kleinere Werte an) als das Moment *M_{kₐₖₜᵤₑₗₗ}* von der Antriebseinheit 7 beim normalen Anfahren des Fahrzeugs 1 unter normalen Haftungsbedingungen.

Der nächste Schritt ist die Kontrolle des Schlupfs der angetriebenen Räder 5, wobei mit Hilfe von Sensoren festgestellt wird, ob die Geschwindigkeit der angetriebenen Räder 5 v_{H} mit der Geschwindigkeit der gezogenen Räder 6 v_{T} übereinstimmt. Die Erhöhung des Moments *M_{kₐₖₜᵤₑₗₗ}* von der Antriebseinheit 7 und die Kontrolle des Schlupfs der angetriebenen Räder 5 sind Teil eines Zyklus, der zunächst die Kontrolle des Zählers der Bewegung umfasst, anschließend die Erhöhung des Moments *M_{kₐₖₜᵤₑₗₗ}* von der Antriebseinheit 7 um einen bestimmten Schritt, der kleiner ist als beim normalen Anfahren des Fahrzeugs 1, und zwar entlang einer bestimmten Momentkurve von der Antriebseinheit 7, und dann die Kontrolle des Schlupfes der angetriebenen Räder 5. Wenn die Bedingung für die Kontrolle des Schlupfs der angetriebenen Räder 5 erfüllt ist, wird der Zyklus von der Zählerkontrolle bis zur Geschwindigkeitskontrolle wiederholt.

Wird vom Zähler in einem Zyklus eine maximale Strecke erfasst, wird das Fahrzeug 1 anschließend wie oben erwähnt in die erste Richtung 3 bewegt und der Zeitpunkt von der Antriebseinheit 7 erfasst, an dem diese maximale Strecke erreicht wurde. Danach wird der Zähler zurückgesetzt und der Zyklus von der Zählerkontrolle bis zur Geschwindigkeitskontrolle wiederholt, jedoch im Schritt Einstellung des Moments *M_{kₐₖₜᵤₑₗₗ}* wird von der Antriebseinheit 7 vom Wert fortgesetzt, der beim Erreichen der maximalen Strecke auf dem Zähler gefunden wurde. Das Moment *M_{kₐₖₜᵤₑₗₗ}* von der Antriebseinheit 7 ist im nächsten Zyklus höher als im vorherigen. Wenn die Geschwindigkeiten von mindestens einem angetriebenen Rad 5 und mindestens einem gezogenen Rad 6 unterschiedlich sind, wird das Maximalmoment *M_{kₘₐₓ}* entsprechend den zuletzt aufgezeichneten Zählerdaten definiert und der Zyklus beendet.

Das Maximalmoment *M_{kₘₐₓ}* ist das letzte aufgezeichnete Moment, bei dem sich die angetriebenen Räder 5 und die gezogenen Räder 6 mit der gleichen Geschwindigkeit drehten - d. h. die Räder rollten noch auf dem Gelände 2 und rutschten nicht. Die Haftung zwischen den Rädern und dem Gelände 2 wird in der ersten beispielhaften Ausführung durch das Maximalmoment *M_{kₘₐₓ}* zum Abrollen der Räder auf dem Gelände 2 definiert. Nach der Erfassung des maximalen Drehmoments *M_{kₘₐₓ}* wird das Moment *M_{kₐₖₜᵤₑₗₗ}* von der Antriebseinheit 7 auf ca. 0 Nm eingestellt, um sicherzustellen, dass das Fahrzeug stillsteht, das Fahrzeug 1 wird abgebremst und es folgt der Schritt des Anfahrens des Fahrzeugs 1 in die erste Richtung 3.

### ANFAHREN IN DIE ERSTE RICHTUNG 3:

Der Schritt des Anfahrens in die erste Richtung 3 dient zum effektiven Anfahren des Fahrzeugs 1. Das Fahrzeug 1 fährt mit einem bestimmten Momentenverlauf *M_{kₐₖₜᵤₑₗₗ}* von der Antriebseinheit 7, der vom erfassten Maximalmoment *M_{kₘₐₓ}* abhängt, bis zu einem maximalen Wert des Moments, der um einen Offset erhöht werden kann. Bei der Erhöhung des Moments *M_{kₐₖₜᵤₑₗₗ}* werden gleichzeitig die Radgeschwindigkeiten überprüft, um festzustellen, ob sich das Fahrzeug 1 ordnungsgemäß bewegt und effektiv ausfährt, oder ob es zu Radschlupf kommt, das Fahrzeug 1 sich eingräbt usw., oder ob die Radgeschwindigkeit bereits ausreicht und das Fahrzeug 1 bereits geborgen worden ist.

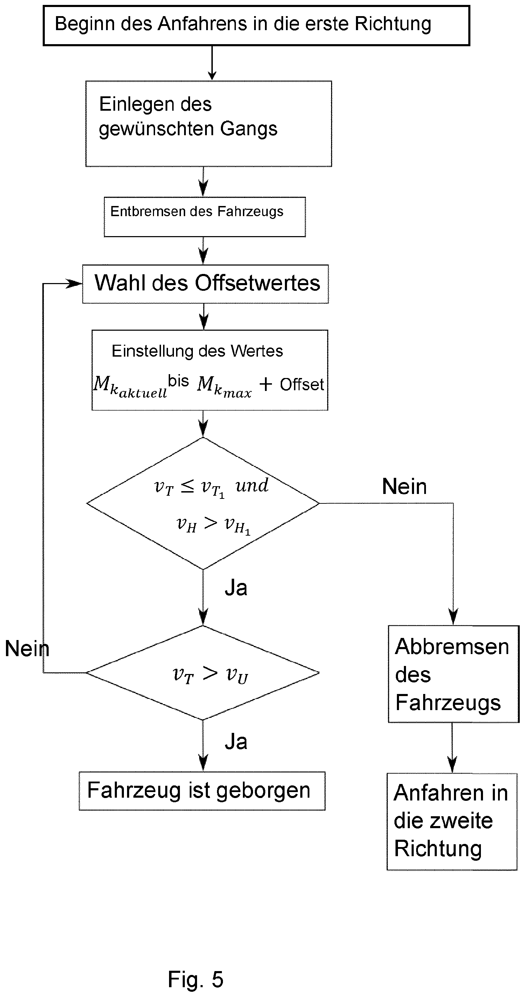

Nach der Detektion der Haftung folgt der Schritt des Anfahrens des Fahrzeugs 1 in die erste Richtung 3, deren Verlauf in der Figur 5 dargestellt ist. Der Schritt des Anfahrens des Fahrzeugs 1 in die erste Richtung 3 umfasst zunächst das Einlegen der Geschwindigkeitsstufe für das Anfahren in die erste Richtung 3 (d. h. in der ersten beispielhaften Ausführung wird der Vorwärtsgang eingelegt), das Abbremsen des Fahrzeugs 1 und das Auswählen des Offsets. Der Offset ist in der ersten beispielhaften Ausführung ein Drehmomentinkrement, das von der erfassten Oberfläche abhängt - d.h. von dem detektierten Maximalwert des Drehmoments *M_{kₘₐₓ},* der innerhalb eines bestimmten Intervalls liegt, das der gegebenen Oberfläche des Geländes 2 entspricht. Mit anderen Worten, der Offset-Wert wird durch den Typ des Geländes 2 und den Wirkungsgrad des Anfahrens in die erste Richtung 3 und die zweite Richtung 4 im vorherigen Anfahrzyklus in die erste Richtung 3 und die zweite Richtung 4 bestimmt.

In der ersten beispielhaften Ausführung ist das Offset beim ersten Anfahren in die erste Richtung 3 auf 0 eingestellt - das Drehmoment *M_{kₐₖₜᵤₑₗₗ}* von der Antriebseinheit 7 wird daher auf den maximalen Wert des Drehmoments *M_{kₘₐₓ}* ansteigen, der im Schritt der Detektion der Haftung ermittelt wurde. Nach den obigen Schritten wird das Moment *M_{kₐₖₜᵤₑₗₗ}* von der Antriebseinheit 7 kontinuierlich erhöht, basierend auf dem ermittelten Maximalmoment *M_{kₘₐₓ}.* Der Verlauf des Anstiegs des Moments *M_{kₐₖₜᵤₑₗₗ}* von der Antriebseinheit 7 ist abhängig vom detektierten Gelände 2 und dessen Haftung gegenüber den Rädern des Fahrzeugs 1. Gleichzeitig werden die Drehzahlen der angetriebenen Räder 5 und der gezogenen Räder 6 von der Steuereinheit 8 des Fahrzeugs 1 überwacht und aufgezeichnet, und die Geschwindigkeitsbedingungen der angetriebenen Räder 5 und der gezogenen Räder 6 werden überprüft, um sicherzustellen, dass das Fahrzeug 1 noch in Bewegung ist (in einer Bewegung, die zum Bergen des Fahrzeugs 1 führt) und dass die Räder nicht durchdrehen.

In der ersten beispielhaften Ausführung wird verfolgt, ob das mindestens eine gezogene Rad 6 eine Drehgeschwindigkeit v_{T} hat, die gleich oder kleiner ist als die v_{T1}, die in der ersten beispielhaften Ausführung 0,5 km/h beträgt, und ob das mindestens eine angetriebene Rad 5 eine Drehgeschwindigkeit v_{H} hat, die größer ist als die Geschwindigkeit v_{H1}, die in der ersten beispielhaften Ausführung 3 km/h beträgt. Sind diese Bedingungen erfüllt, wird das Fahrzeug 1 abgebremst und anschließend fährt das Fahrzeug 1 in die zweite Richtung 4. Sind sie nicht erfüllt und ist gleichzeitig die Geschwindigkeit der gezogenen Räder 6 v_{T} höher als die vordefinierte Geschwindigkeit v_{U}, die anzeigt, dass das Fahrzeug 1 geborgen ist, wird die Ausführung der Schritte gemäß dem Verfahren zum Bergen beendet. In der ersten beispielhaften Ausführung beträgt die Geschwindigkeit v_{U} 10 km/h.

Ist die Geschwindigkeit mindestens eines angetriebenen Rades 5 größer als die Geschwindigkeit v_{H1} und die Geschwindigkeit des gezogenen Rades 6 kleiner oder gleich der Geschwindigkeit v_{T1} und gleichzeitig kleiner als die Geschwindigkeit v_{U}, folgt wieder der Schritt, bei dem ein anderer Offset-Wert eingestellt wird (hier wird der Offset-Wert entsprechend dem detektierten Gelände 2 erhöht) und der Zyklus von der Einstellung des Offsets bis zur Überprüfung der Geschwindigkeitsverhältnisse wiederholt - das Moment *M_{kₐₖₜᵤₑₗₗ}* der Antriebseinheit 7 wird wieder kontinuierlich erhöht, basierend auf dem Maximalmoment *M_{kₘₐₓ}* von der Antriebseinheit 7 und dem gewählten Offset. Dieses Moment von der Antriebseinheit 7 ist höher als im vorangegangenen Schritt der Momenteinstellung, um das Fahrzeug 1 schneller bergen.

Der Offset-Wert ist in der ersten beispielhaften Ausführung im Schritt des Anfahrens 3 in die erste Richtung und im Schritt des Anfahrens 4 in die zweite Richtung für mehrere Zyklen gleich, in denen das Moment *M_{kₐₖₜᵤₑₗₗ}* erhöht wird und die Drehzahlen überprüft werden. Nach einer bestimmten Anzahl von Zyklen ändert sich der Offset-Wert, vorzugsweise erhöht er sich.

### ANFAHREN IN DIE ZWEITE RICHTUNG 4:

Der Schritt des Anfahrens in die zweite Richtung 4 dient zum effektiven Anfahren des Fahrzeugs 1 in die zweite Richtung 4. In Kombination mit dem Anfahren in die erste Richtung 3 wird das Fahrzeug 1 dadurch geschaukelt, was zu einer effizienten Bergung des Fahrzeugs 1 führt. Das Fahrzeug 1 fährt mit einem bestimmten Momentenverlauf *M_{kₐₖₜᵤₑₗₗ}* von der Antriebseinheit 7, der vom erfassten Maximalmoment *M_{kₘₐₓ}* abhängt, bis zu einem Maximalwert des Moments, der um ein Offset erhöht werden kann. Bei Erhöhung des Moments *M_{kₐₖₜᵤₑₗₗ}* werden gleichzeitig die Radgeschwindigkeiten überprüft, um festzustellen, ob sich Fahrzeug 1 ordnungsgemäß bewegt und effizient birgt, oder ob es zu Radschlupf kommt, das Fahrzeug 1 eingegraben wird usw. Während der Bewegung des Fahrzeugs 1 wird mit Hilfe des Zählers auch überprüft, ob das Fahrzeug 1 bereits eine bestimmte, als sicher eingestellte Fahrstrecke (z.B. aufgrund von Vorschriften für ein bestimmtes Fahrzeug 1) überschritten hat, da der Fahrer in der zweiten Fahrtrichtung 4 in den meisten Fällen keine ausreichende Übersicht über die Umgebung haben dürfte.

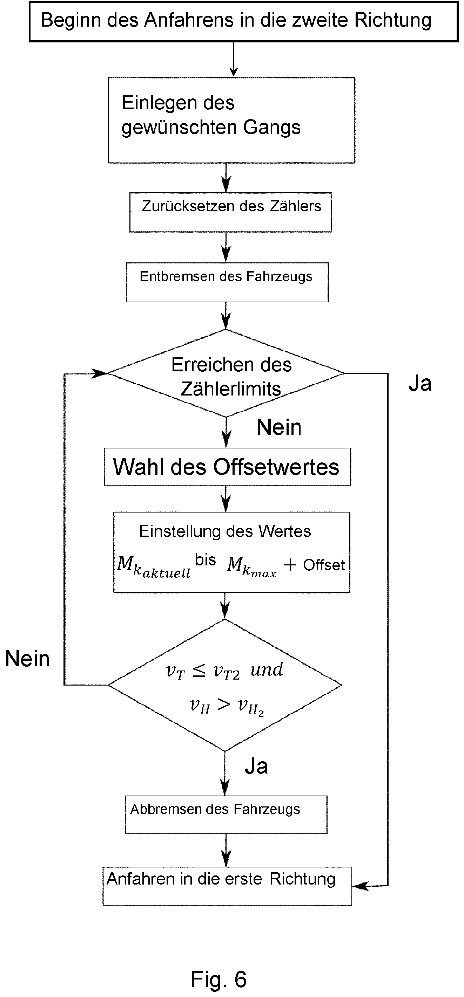

Wird das Fahrzeug 1 nach dem ersten Schritt des Anfahrens 3 in die erste Richtung nicht geborgen, folgt der Schritt des Anfahrens in die zweite Richtung 4, wie in der Figur 6 dargestellt. Das Anfahren in die zweite Richtung 4 in der ersten beispielhaften Ausführung umfasst das Schalten in die inverse Geschwindigkeitsstufe, das Löschen der Zählerstände der Bewegung für eine neue Messung in der entgegengesetzten Bewegungsrichtung des Fahrzeugs 1 und das Lösen der Bremsen des Fahrzeugs 1. Dann folgt ein ähnlicher Zyklus wie beim Schritt des Anfahrens in die erste Richtung 3, der die Überprüfung des Zählers von Bewegungen in der zweiten Richtung 4 und die Einstellung des Offsets umfasst.

Die Steuereinheit 8 des Fahrzeugs 1 prüft, ob der Grenzwert des Zählers bereits erreicht ist, d.h. ob in der ersten beispielhaften Ausführung die maximale Zeit bei der Bewegung in der zweiten Richtung 4 bereits erreicht ist. Wenn die Zählergrenze nicht erreicht ist, wird ein Offset ausgewählt. Im ersten Zyklus von der Zählerkontrolle bis zur Überprüfung der Geschwindigkeitsbedingungen ist das Offset Null. Beim nächsten Zyklus, wenn der Schritt des Anfahrens in die erste Richtung 3 und der Schritt des Anfahrens in die zweite Richtung 4 abgewechselt werden, wenn das Fahrzeug 1 nicht geborgen wird, erhöht sich das Offset, Nach der Auswahl des Offsets wird in der ersten beispielhaften Ausführung das Drehmoment *M_{kₐₖₜᵤₑₗₗ}* von der Antriebseinheit 7 des Fahrzeugs 1 auf die Räder kontinuierlich auf den im Schritt der Detektion der Haftung ermittelten Maximalwert *M_{kₘₐₓ}* erhöht, und zwar um den gewählten Offset.

Bei der Erhöhung des Drehmoments *M_{kₐₖₜᵤₑₗₗ}* wird die Bedingung der Geschwindigkeit im Schritt des Anfahrens in die zweite Richtung 4 ständig überprüft. In der ersten beispielhaften Ausführung wird verfolgt, ob das mindestens eine gezogene Rad 6 eine Drehgeschwindigkeit v_{T} hat, die gleich oder kleiner ist als die Geschwindigkeit v_{T2}, die in der ersten beispielhaften Ausführung 0,5 km/h beträgt, und ob das mindestens eine angetriebene Rad 5 eine Drehgeschwindigkeit v_{H} hat, die größer ist als die Geschwindigkeit v_{H2}, die in der ersten beispielhaften Ausführung 3 km/h beträgt. Sind diese Bedingungen erfüllt, wird das Fahrzeug 1 abgebremst und anschließend folgt der Schritt des Anfahrens des Fahrzeugs 1 in die zweite Richtung 3. Werden sie nicht erfüllt, wird der Zyklus mit den Schritten von der Zählergrenzwertkontrolle bis zur Geschwindigkeitskontrolle im Schritt des Anfahrens in die zweite Richtung 4 wiederholt. Die maximale Anzahl von Wiederholungen dieses Zyklus im gegebenen Schritt des Anfahrens in die zweite Richtung 4 beträgt drei. Mit jedem weiteren Zyklus erhöht sich das Offset in der ersten beispielhaften Ausführung. Wird die Geschwindigkeitsbedingung auch nach drei aufeinanderfolgenden Versuchen nicht erfüllt, folgt der Schritt des Anfahrens in die erste Richtung 3.

Wenn das Erreichen der Zählergrenze festgestellt wird, wird der Schritt des Anfahrens in die zweite Richtung 4 abgebrochen und folgt der Schritt des Anfahrens in die erste Richtung 3. Die Kontrolle des Erreichens des Zählergrenzwerts begrenzt die Bewegung in die zweite Richtung 4 und hat eine sicherheitstechnische Bedeutung.

Falls die Schritte des Anfahrens in die erste Richtung 3 und Anfahrens in die zweite Richtung 4 mehrmals hintereinander wiederholt wurden, in der ersten beispielhaften Ausführung viermal, wird der Wert des Maximalmoments *M_{kₘₐₓ}* um ein Offset erhöht, das in Abhängigkeit von dem detektierten Typ des Geländes 2 gewählt wurde.

Bei jedem Schritt des Verfahrens zum Bergen kann das Verfahren zum Bergen durch einen Eingriff des Fahrers beendet werden. In der ersten beispielhaften Ausführung kann das Verfahren zum Bergen durch Betätigung des Bremspedals beendet werden (außer in dem Schritt, in dem dies von der Steuereinheit 8 zur Bestätigung der Einleitung der Funktion verlangt wird).

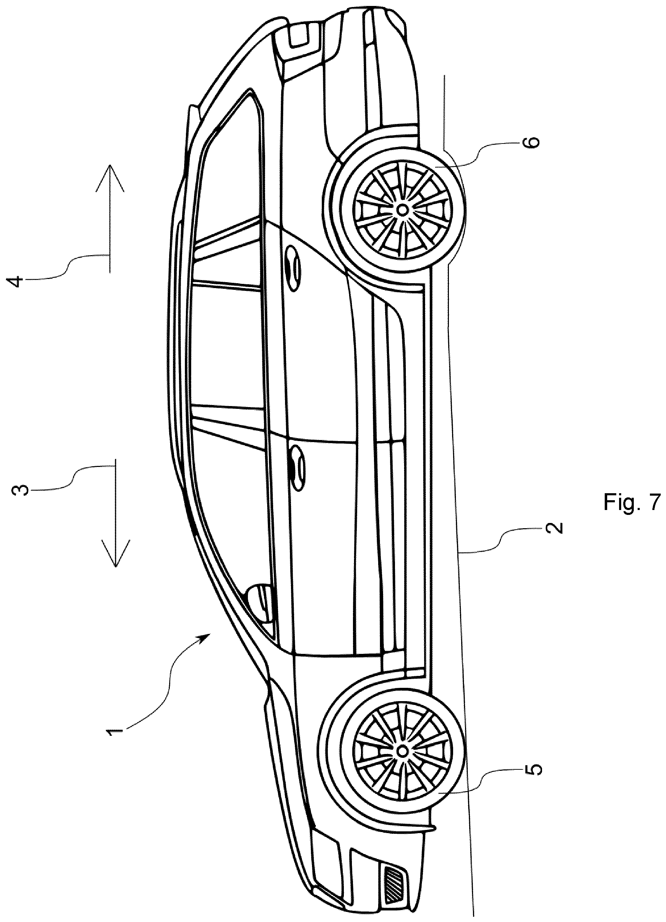

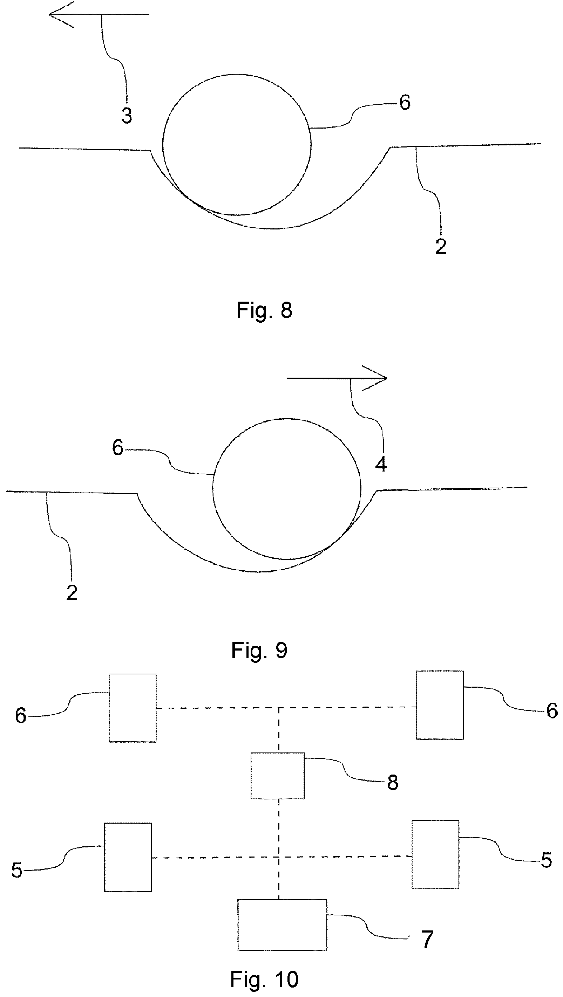

Die zweite beispielhafte Ausführung, die in den Figuren 7-10 dargestellt ist, umfasst ein Fahrzeug 1, das zur Durchführung des Verfahrens zum Bergen gemäß der ersten beispielhaften Ausführung beschaffen ist. Das Fahrzeug 1 hat somit die Funktion, das Fahrzeug 1 zu bergen. Das Fahrzeug 1 weist darüber hinaus die Standardmerkmale eines Fahrzeugs 1 mit Verbrennungsmotor auf - Karosserie, Vorder- und Hinterachse mit Rädern, Lenkungssystem, Verbrennungsmotor, Akkumulator, Sitze usw. Das Fahrzeug 1 in der zweiten beispielhaften Ausführung hat eine angetriebene Vorderachse, d. h. die beiden Vorderräder sind angetriebene Räder 5 und die beiden Hinterräder sind gezogene Räder 6. In der zweiten beispielhaften Ausführung steckt das Fahrzeug 1 mit dem hinteren gezogenen Rad 6 im Gelände 2 fest, wie in der Figur 7 zu sehen ist. Die Steuereinheit 8 des Fahrzeugs 1 steuert die Durchführung des Verfahrens zum Bergen und es handelt sich um eine Standardsteuereinheit 8 des Fahrzeugs 1. Die Steuereinheit 8 ist mit den Vorder- und Hinterachsen, d.h. mit den angetriebenen Rädern 5 sowie mit den gezogenen Rädern 6 und deren Sensoren (insbesondere dem Sensor der Drehgeschwindigkeit der Räder), sowie mit der Antriebseinheit 7 des Fahrzeugs 1 datenverbunden. Diese Verbindung ist in der Figur 10 dargestellt. Desweiteren ist sie mit dem Lenksystem (Getriebe, Pedale usw.), der Informationsanzeige, dem Zähler der Bewegungen usw. verbunden.

In der zweiten beispielhaften Ausführung wird der Schritt der Detektion des Feststeckens des Fahrzeugs 1 von der Steuereinheit 8 des Fahrzeugs 1 durchgeführt. Die Steuereinheit 8 wertet während der Fahrt des Fahrzeugs 1 (durch Erfassung der Radgeschwindigkeit) aus, ob die Bedingung für die Geschwindigkeit des gezogenen Rades 6 v_{T} ≤ 0,5 km/h und die Bedingung für die Geschwindigkeit mindestens eines angetriebenen Rades 5 v_{H} > 3 km/h erfüllt ist. Im zweiten Ausführungsbeispiel steckt das Fahrzeug 1 mit seinem linken Hinterrad in einem Schlagloch im Gelände 2 mit geringer Haftung zum Rad des Fahrzeugs 1 - hier konkret im Sand - fest. Die Steuereinheit 8 zeichnet ebenfalls auf, welches Rad welche Geschwindigkeit hat, und eventuell weitere Parameter, um festzustellen, welches Rad festsitzt.

In der zweiten beispielhaften Ausführung umfasst das Fahrzeug 1 eine elektronische Differenzialsperre (EDS-Funktion), mit der diese Detektion durchgeführt wird. In der zweiten beispielhaften Ausführung ist die Funktion des Bergens des Fahrzeugs 1 mit dem elektronischen ABS-System und dem dynamischen Stabilisierungssystem (ESP) datenverbunden. Mit Hilfe der Sensoren, die standardmäßig zum ESP-System gehören (Raddrehzahlsensor, Beschleunigungssensor usw.), werden die für die Detektion des Feststeckens eines Fahrzeugs erforderlichen Parameter während der Fahrt des Fahrzeugs 1 mehrmals pro Sekunde erfasst. Die Kontrolle der Bedingung des Feststeckens des Fahrzeugs 1 wird also während der gesamten Fahrt des Fahrzeugs 1 durchgeführt.

Die Steuereinheit 8 des Fahrzeugs 1 umfasst werkseitig voreingestellte Drehmomentintervalle, die beim Schritt der Detektion der Haftung erfasst werden können. Jedes Intervall entspricht einem bestimmten Typ des Geländes 2, d. h. ein anderes Intervall maximaler Drehmomente *M_{kₘₐₓ}* ist auf Schnee möglich, ein anderes auf nassem Gras usw. Diese Intervalle maximaler Drehmomente werden durch Berechnung und Experiment für einen bestimmten Fahrzeugtyp 1 bestimmt.

Sobald die Steuereinheit 8 ein Feststecken erkennt, wird dem Fahrer zunächst eine Meldung über die Detektion des Feststeckens des Fahrzeugs 1 auf dem mittleren Display angezeigt, mit der Bitte um eine erste Bestätigung der Aktivierung der Funktion Bergen des Fahrzeugs 1. Die erste Bestätigung erfolgt, indem der Fahrer das Bremspedal betätigt. Bei Nichtbestätigung innerhalb eines bestimmten Zeitintervalls (hier in Zehntelsekunden) wird das Feststecken des Fahrzeugs 1 erneut signalisiert und die erste Bestätigung erneut angefordert. In der zweiten beispielhaften Ausführung umfasst die Anzeige auf dem Display über die Detektion des Feststeckens des Fahrzeugs 1 auch eine Taste zur direkten Ablehnung der Funktion des Bergens. Bestätigt der Fahrer die Durchführung der nächsten Schritte immer noch nicht, wird die Funktion Bergen des Fahrzeugs 1 beendet. Wenn das Bremspedal in der zweiten beispielhaften Ausführung betätigt wird, zeigt das Display erneut eine Aufforderung zur weiteren Bestätigung der Aktivation der nächsten Schritte der Funktion Bergen. Die zweite Bestätigung erfolgt, indem der Fahrer das Gaspedal betätigt.

Das Fahrzeug 1 gemäß der zweiten beispielhaften Ausführung umfasst einen Modus (Daten und einen Algorithmus zur Verarbeitung und Verwendung der Daten) in der Steuereinheit 8 für die EDS-Funktion zur Durchführung des Verfahrens zum Bergen. Dieser Modus umfasst solche Werte, dass die EDS-Funktion für eine schnellere und intensivere Wirkung auf das rutschende Rad angepasst werden kann. Außerdem umfasst die Steuereinheit 8 eine Getriebestellung, die das gleichzeitige Einlegen des ersten Gangs und des Rückwärtsgangs ermöglicht, um die Bewegung des Fahrzeugs 1 in entgegengesetzten Richtungen schneller und reibungsloser zu erreichen. Gleichzeitig umfasst diese Einstellung die Anpassung der Kupplungssteuerung an die detektierte Haftung, um ein stufenloses oder aggressives Anfahren (je nach Gelände 2) des Fahrzeugs 1 auf der Oberfläche des Geländes 2 zu erreichen. Dies sind Standardeinstellungen für einen Fachmann in diesem Bereich.

Alle Schritte der Detektion der Haftung in der ersten beispielhaften Ausführung werden hier von der Steuereinheit 8 gesteuert. Zunächst nimmt die Steuereinheit 8 die gewünschte Gangeinstellung für das Anfahren in die zweite Richtung 4, im zweiten Ausführungsbeispiel die Gangeinstellung für die Rückwärtsrichtung, vor, setzt die Zähler der Bewegung zurück und löst die Bremse des Fahrzeugs 1. Das Fahrzeug 1 fährt dann in die zweite Richtung 4 an, indem das Drehmoment *M_{kₐₖₜᵤₑₗₗ}* von der Antriebseinheit 7 mit einem bestimmten Schritt erhöht wird und die Geschwindigkeitsbedingung von der Steuereinheit 8 geregelt wird, wobei die von den Radgeschwindigkeitsensoren erfassten Geschwindigkeiten der angetriebenen Räder 5 und der gezogenen Räder 6 gleich sein müssen mit einer Differenz, die innerhalb einer Toleranz liegt - in der zweiten beispielhaften Ausführung kann die Geschwindigkeitsdifferenz maximal 0,5 km/h betragen.

Desweiteren prüft die Steuereinheit 8, ob der Grenzwert auf dem Zähler der Bewegungen erreicht wurde. Der Wert des maximalen Drehmoments *M_{kₘₐₓ}* für eine bestimmte Oberfläche des Geländes 2 wird in der Steuereinheit 8 gespeichert. Die Steuereinheit 8 umfasst, basierend auf experimentellen Messungen und Berechnungen, vordefinierte Bereiche möglicher Maximalmomente von der Antriebseinheit 7, die im Schritt der Detektion der Haftung ermittelt wurden. Nach der Feststellung des Maximalmoments *M_{kₘₐₓ}* im Schritt der Detektion der Haftung wertet die Steuereinheit 8 aus, um welches Gelände 2 es sich handelt. Im zweiten Ausführungsbeispiel werden die vordefinierten Bereiche für Schnee, Sand, Schlamm, nasses Gras und Eis festgelegt. Ferner wird auf Befehl der Steuereinheit 8 im Schritt der Detektion der Haftung das Drehmoment *M_{kₐₖₜᵤₑₗₗ}* am Motor auf Null gesetzt, um das Fahrzeug 1 anzuhalten, und die Bremsen des Fahrzeugs 1 werden betätigt.

Die Schritte des Anfahrens in die erste Richtung 3 und Anfahrens in die zweite Richtung 4 werden auch in der zweiten beispielhaften Ausführung von der Steuereinheit 8 ausgeführt, d.h. sie werden vollautomatisch ausgeführt. Zunächst führt die Steuereinheit 8 das Einlegen des gewünschten Gangs für das Anfahren in die erste Richtung 3 aus, in der zweiten beispielhaften Ausführung das Einlegen des Vorwärtsgangs, und löst die Bremsen des Fahrzeugs 1. Anschließend wählt die Steuereinheit 8 aufgrund des Wertes des maximalen Drehmomentwerts *M_{kₘₐₓ}* das Offset aus. Die Steuereinheit 8 umfasst einen vordefinierten Bereich möglicher Offsets, den sie unter anderem auf der Grundlage des ermittelten Wertes *M_{kₘₐₓ}* und der Anzahl der Wiederholungen der oben genannten Zyklen im Schritt des Anfahrens in die erste Richtung 3 und/oder im Schritt des Anfahrens in die zweite Richtung 4 und/oder der Anzahl der nacheinander abwechselnden Schritte des Anfahrens in die erste Richtung 3 und Anfahrens in die zweite Richtung 4 auswählt. Darüber hinaus steuert die Steuereinheit 8 den Drehmomentanstieg *M_{kₐₖₜᵤₑₗₗ}* des Motors in Abhängigkeit von der detektierten Haftung des Geländes 2 und prüft gleichzeitig die Geschwindigkeitsbedingungen v_{T} ≤ v_{T1} und v_{H} > v_{H1} mittels Radsensoren. Das Anfahren in die erste Richtung 3 ist in der Figur 8 dargestellt.

Ähnlich wie beim Schritt des Anfahrens in die erste Richtung 3 wird des Anfahrens in die zweite Richtung 4 durchgeführt, wobei alle Schritte des Schritts des Anfahrens in die zweite Richtung 4 von der Steuereinheit 8 gesteuert werden. Die Bergung von Fahrzeug 1 erfolgt somit vollautomatisch. Das Anfahren in die erste Richtung 14 ist in der Figur 9 dargestellt. So ist in den Figuren 8 und 9 die Schaukelbewegung des Rades (und damit des Fahrzeugs 1) dargestellt, die zur Bergung des Fahrzeugs 1 führt.

### Alternative Ausführung:

Die im Folgenden kurz dargestellten Alternativen zu den einzelnen Merkmalen oder Bestandteilen der Erfindung können nach dem Ermessen des Fachmanns unabhängig voneinander verwendet oder miteinander kombiniert werden. Sofern für eine bestimmte alternative Ausführung nichts anderes angegeben ist, werden die anderen Merkmale dieser Ausführung wie in einer der oben beschriebenen und in den Zeichnungen dargestellten Ausführungen.

Alternativ im Schritt der Detektion des Fahrzeugs 1 ist der Zyklus zur Überprüfung der Erfüllung von Bedingungen für das Feststecken abschließend. So wird nach einer bestimmten Anzahl von Iterationen (z.B. nach 3 Iterationen) das Verfahren zum Bergen nach Überprüfung der Bedingungen für das Feststecken beendet. Eine weitere mögliche Auslösung des Schritts der Detektion des Feststeckens kann durch die manuelle Auslösung der Funktion zur Bergung durch den Fahrer erfolgen (z. B. durch Drücken der Taste im Fahrzeuginnenraum 1).

Das Gelände 2 mit geringer Haftung kann Sand, Schnee, Schlamm usw. sein. Das Rad kann auf diesem Gelände leicht durchrutschen und das Fahrzeug 1 kann sich auf diesem Gelände 2 leicht sozusagen eingraben.

Alternativ dazu umfasst das Verfahren zur Bergung keinen Schritt der Anforderung zur Bestätigung zur Einleitung der Fahrzeugbergung 1, sondern umfasst es zwischen dem Schritt der Detektion des Feststeckens und Detektion der Haftung einen Schritt der Meldung der Einleitung der Bergung, bei dem vom Fahrer des Fahrzeugs keine Maßnahmen erforderlich sind.

Alternativ kann bei einem Fahrzeug 1 mit Verbrennungsmotor zwischen dem Schritt Einstellung der Parameter bei der EDS-Funktion und der Einstellung des Wertes des Moments des Motors bei der Sektion Anforderung zur Bestätigung der Einleitung der Bergung ein Schritt Einstellung des Getriebes erfolgen, der das gleichzeitige Einlegen des Rückwärtsgangs und des ersten Gangs ermöglicht für ein schnelleres und einfacheres Abwechseln der Bewegung des Fahrzeugs in entgegengesetzten Richtungen. Alternativ passt diese Einstellung in den nachfolgenden Schritten des Verfahrens zum Bergen die Steuerung der Kupplungen in Abhängigkeit von der detektierten Haftung an, um ein sanftes oder aggressives Anfahren des Fahrzeugs 1 in Abhängigkeit von der Oberfläche des Geländes 2 und damit der detektierten Haftung zu erreichen.

Alternativ dazu wird die vom Zähler erfasste Wegstrecke durch die Anzahl der Impulse der Räder der gezogenen Achse aufgezeichnet.

Mit Hilfe von der Detektion der Haftung können neben dem Drehmoment von dem Motor auch andere Parameter verändert werden. Beispielsweise kann bei einer erhöhten Haftung die Motordrehzahl, die Beschleunigungsrate der Umdrehungen und/oder die Anfahrzeit des Fahrzeugs usw. steigen.

Alternativ kann das Verfahren zum Bergen auch dann angewandt werden, wenn das Rad in einem Schlagloch auf dem Gelände 2 bei normalen Haftungsbedingungen zwischen dem Rad und dem Gelände 2 auch bei reduzierter Haftung feststeckt.

Alternativ dazu ändert sich das Offset mit dem nächsten Zyklus der Offsetauswahl und der Überprüfung der Geschwindigkeitsbedingungen bei den Schritten Anfahren in die erste Richtung 3 und/oder Anfahren in die zweite Richtung 4.

Alternativ wird in der Steuereinheit 8 eine maximale Anzahl von Zyklusdurchläufen von der Einstellung des Offsets bis zur Überprüfung der Geschwindigkeitsbedingungen im Schritt des Anfahrens in die erste Richtung 3 eingestellt, wenn die erste Bedingung der Geschwindigkeiten der gezogenen Räder 6 und der angetriebenen Räder 5 aus der ersten beispielhaften Ausführung erfüllt ist, die zweite Bedingung jedoch nicht (v_{T}>v_{U}). Nach Erreichen der maximalen Anzahl von Wiederholungen des Zyklus ist es bevorzugt, wenn das Anfahren in die zweite Richtung 4 folgt.

Alternativ wird bei einem Fahrzeug 1 mit der elektrischen Antriebseinheit 7 die Motordrehrichtung in den Schritten Einlegen des gewünschten Gangs für das Anfahren in die erste Richtung 3, das Anfahren in die zweite Richtung 4 und die Detektion der Haftung geändert, um die Fahrtrichtung des Fahrzeugs 1 zu ändern.

Alternativ folgt nach mehrmaliger Wiederholung des Zyklus mit abwechselndem Anfahren in die erste Richtung 3 und Anfahren in die zweite Richtung 4 wiederum der Schritt der Detektion der Haftung, bei dem eine erneute Erfassung des Maximalmoments *M_{kₘₐₓ}* von der Antriebseinheit 7. Danach folgt wiederum der Schritt des Anfahrens in die erste Richtung 3.

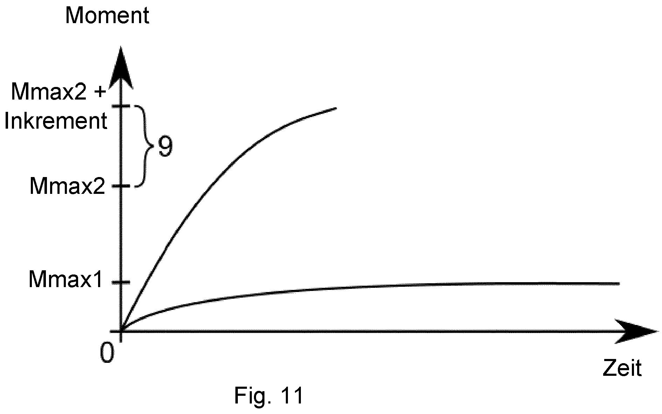

Eine weitere alternative Ausführung wird auf die gleiche Weise wie die erste beispielhafte Ausführung durchgeführt, jedoch mit einer Verwendung eines vordefinierten Inkrements 9 des Moments - d. h. des Offsets. Dieses Inkrement 9 wird bei dem Anfahren in die erste sowie in die zweite Richtung bei einigen Geländetypen hinzugefügt, bei anderen Geländetypen nie. Die Geländetypen mit Offset sind Schlamm und Sand. Diese beiden Geländetypen haben ein höheres erfasstes Maximalmoment im Schritt der Detektion der Haftung als die anderen in dieser Ausführung unterschiedenen Geländetypen - Schnee, Eis und nasses Gras. Wie in der Figur 11 zu sehen ist, haben beide Geländetypen mit Offset, denen das Mmax2-Moment entspricht, einen deutlich steileren Anstieg des Moments und ein deutlich höheres Moment beim Anfahren. Die beiden beispielhaften Werte des Moments, die in der Figur 11 gezeigt sind, wurden in diesem Fall auf einem konkreten Gelände gemessen, auf dem das Feststecken stattfand.

Die Feststellung, ob das Fahrzeug auf dem Gelände Schlamm/Sand feststeckt, wo ein Offset vorgesehen werden soll, oder auf Gelände Schnee/Eis/Gras, wo kein Offset vorgesehen werden soll, erfolgt automatisch im Schritt der Detektion der Haftung. Das ermittelte Maximalmoment wird mit dem vordefinierten Grenzwert verglichen. Dieser Grenzwert für das Moment, das mit dem Motor geliefert wird, ist also die Grenze zwischen dem ermittelten Maximalmoment, wenn der Geländetyp als Schlamm/Sand über diesem Grenzwert gekennzeichnet ist, und dem Moment, wenn der Geländetyp als Schnee/Eis/nasses Gras unterhalb dieses Grenzwertes gekennzeichnet ist. In dieser Ausführung beträgt der Grenzwert des mit dem Motor gelieferten Moments 16 Nm.

Der Offset beträgt bei dieser Ausführung 30 % des ermittelten Maximalmoments aus dem Schritt der Detektion der Haftung. Der Mmax2-Wert wurde bei dieser Ausführung auf Sand gemessen und das mit dem Mmax2-Motor gelieferte Moment wurde mit 45 Nm gemessen. Der Wert von Mmax1 wurde auf nassem Gras gemessen und betrug 15 Nm. Das Moment von Null bis zum Maximalwert Mmax2 wird entsprechend der Kurve in der Figur 11 für 4 Sekunden für das Bergen auf Sand in dieser Ausführung erhöht, und wird von Null bis Mmax1 für 8 Sekunden für Gras in dieser Ausführung erhöht.

### Bezugszeichenliste

- 1 -: Fahrzeug
- 2 -: Gelände
- 3 -: erste Richtung
- 4 -: zweite Richtung
- 5 -: angetriebenes Rad
- 6 -: gezogenes Rad
- 7 -: Antriebseinheit
- 8 -: Steuereinheit
- 9 -: Inkrement

## Patentansprüche

1. Verfahren zum Bergen eines Fahrzeugs (1) bei verminderten Haftungsverhältnissen eines Geländes (2) **dadurch gekennzeichnet, dass** es folgende Schritte umfasst:
a. Detektion des Feststeckens des Fahrzeugs (1),
b. Detektion der Haftung zwischen der Oberfläche des Geländes (2) und wenigstens einem Rad des Fahrzeugs (1),
c. Anfahren des Fahrzeugs (1) in die erste Richtung (3), wobei das Anfahren in die erste Richtung (3) von der detektierten Haftung abhängt,
d. Anfahren des Fahrzeugs (1) in die zweite Richtung (4), wenn im Schritt des Anfahrens des Fahrzeugs (1) in die erste Richtung (3) die Bergung nicht erfolgreich war, wobei das Anfahren in die zweite Richtung (4) von der detektierten Haftung abhängt,
e. wobei sich wenn das Fahrzeug (1) nicht geborgen wurde, der Schritt des Anfahrens des Fahrzeugs (1) in die erste Richtung (3) und der Schritt des Anfahrens des Fahrzeugs (1) in die zweite Richtung (4) wenigstens einmal wiederholen.

2. Verfahren zum Bergen eines Fahrzeugs (1) bei verminderten Haftungsverhältnissen eines Geländes (2) nach Anspruch 1, **dadurch gekennzeichnet, dass** der Schritt der Detektion der Haftung der Oberfläche des Geländes (2) das Anfahren des Fahrzeugs (1) und das Erhöhen eines Moments von der Antriebseinheit des Fahrzeugs (1) auf mindestens ein angetriebenes Rad (5) des Fahrzeugs (1) umfasst, um ein Maximalmoment zum Anfahren des Fahrzeugs (1) in die erste Richtung (3) und/oder in die zweite Richtung (4) zu erfassen, wobei das Maximalmoment ermittelt wird, wenn die Geschwindigkeit des angetriebenen Rades (5) des Fahrzeugs (1) die Geschwindigkeit des gezogenen Rades (6) des Fahrzeugs (1) um einen vordefinierten Geschwindigkeitstoleranzwert übersteigt.

3. Verfahren zum Bergen eines Fahrzeugs (1) bei verminderten Haftungsverhältnissen eines Geländes (2) nach Anspruch 2, **dadurch gekennzeichnet, dass** der Schritt des Anfahrens des Fahrzeugs (1) in die erste Richtung (3) und/oder in die zweite Richtung (4) ein Erhöhen des Moments der Antriebseinheit (7) des Fahrzeugs (1) auf ein Maximalmoment umfasst.

4. Verfahren zum Bergen eines Fahrzeugs (1) bei verminderten Haftungsverhältnissen eines Geländes (2) nach Anspruch 3, **dadurch gekennzeichnet, dass** es darin zwischen mindestens zwei Oberflächentypen unterschieden wird, wobei für mindestens einen der Oberflächentypen in dem Schritt des Anfahrens des Fahrzeugs (1) in die erste Richtung (3) und/oder in die zweite Richtung (4) das Moment um ein vordefiniertes Inkrement über das ermittelte Maximalmoment erhöht wird.

5. Verfahren zum Bergen eines Fahrzeugs (1) bei verminderten Haftungsverhältnissen eines Geländes (2) nach Anspruch 4, **dadurch gekennzeichnet, dass** für mindestens einen anderen Oberflächentyp das Moment nicht um ein vordefiniertes Inkrement über das ermittelte Maximalmoment hinaus erhöht wird.

6. Verfahren zum Bergen eines Fahrzeugs (1) bei verminderten Haftungsverhältnissen eines Geländes (2) nach Anspruch 5, **dadurch gekennzeichnet, dass** für die Oberflächentypen, für die das Moment um ein vordefiniertes Inkrement erhöht wird, das ermittelte Maximalmoment höher und die Erhöhung des Moments im Schritt des Anfahrens steiler ist als für die Oberflächentypen, für die das Moment nicht um ein vordefiniertes Inkrement erhöht wird.

7. Verfahren zum Bergen eines Fahrzeugs (1) bei verminderten Haftungsverhältnissen eines Geländes (2) nach einem der Ansprüche 4 bis 6, **dadurch gekennzeichnet, dass** der Wert des vordefinierten Inkrements eine Funktion des ermittelten Maximalmoments ist.

8. Verfahren zum Bergen eines Fahrzeugs (1) bei verminderten Haftungsverhältnissen eines Geländes (2) nach einem der vorhergehenden Ansprüche, **dadurch gekennzeichnet, dass** der Schritt des Anfahrens des Fahrzeugs (1) in die erste Richtung (3) und der Schritt des Anfahrens des Fahrzeugs (1) in die zweite Richtung (4) eine Detektion der Geschwindigkeit des angetriebenen Rades (5) und der Geschwindigkeit des gezogenen Rades (6) umfasst.

9. Verfahren zum Bergen eines Fahrzeugs (1) bei verminderten Haftungsverhältnissen eines Geländes (2) nach Anspruch 4, **dadurch gekennzeichnet, dass** beim Anfahren des Fahrzeugs (1) in die erste Richtung (3) beim Erreichen der Geschwindigkeit des angetriebenen Rades (5), die größer als ein vordefinierter Wert v_{H1} ist, und beim Erreichen der Geschwindigkeit des gezogenen Rades (6), die gleich oder kleiner als ein vordefinierter Wert v_{T1} ist, das Fahrzeug (1) bremst und der Schritt des Anfahrens des Fahrzeugs (1) in die zweite Richtung (4) folgt.

10. Verfahren zum Bergen eines Fahrzeugs (1) bei verminderten Haftungsverhältnissen eines Geländes (2) nach Anspruch 4 oder 5, **dadurch gekennzeichnet, dass** beim Anfahren des Fahrzeugs (1) in die zweite Richtung (4) beim Erreichen der Geschwindigkeit des angetriebenen Rades (5), die größer als ein vordefinierter Wert v_{H2} ist, und beim Erreichen der Geschwindigkeit des gezogenen Rades (6), die gleich oder kleiner als ein vordefinierter Wert v_{T2} ist, das Fahrzeug (1) bremst und der Schritt des Anfahrens des Fahrzeugs (1) in die erste Richtung (3) folgt.

11. Verfahren zum Bergen eines Fahrzeugs (1) bei verminderten Haftungsverhältnissen eines Geländes (2) nach einem der Ansprüche 4 bis 6, **dadurch gekennzeichnet, dass** beim Erreichen der Geschwindigkeit des gezogenen Rades (6), die gleich oder größer als ein vordefinierter Wert v_{U} ist, das Fahrzeug (1) freigegeben wird.

12. Verfahren zum Bergen eines Fahrzeugs (1) bei verminderten Haftungsverhältnissen eines Geländes (2) nach einem der vorhergehenden Ansprüche, **dadurch gekennzeichnet, dass** der Schritt der Detektion des Feststeckens des Fahrzeugs (1) das Messen der Geschwindigkeit mindestens eines angetriebenen Rades (5) und der Geschwindigkeit mindestens eines gezogenen Rades (6) umfasst, wobei das Feststecken detektiert wird, wenn die Geschwindigkeit des angetriebenen Rades (5) des Fahrzeugs (1) die Geschwindigkeit des gezogenen Rades (6) des Fahrzeugs (1) um einen vordefinierten Geschwindigkeitstoleranzwert überschreitet.

13. Verfahren zum Bergen eines Fahrzeugs (1) bei verminderten Haftungsverhältnissen eines Geländes (2) nach einem der vorhergehenden Ansprüche, **dadurch gekennzeichnet, dass** es den Schritt der Anforderung zur Bestätigung der Einleitung der Bergung des Fahrzeugs (1) umfasst, der an den Schritt der Detektion des Feststeckens des Fahrzeugs (1) anschließt.

14. Fahrzeug, **dadurch gekennzeichnet, dass** es eine Antriebseinheit (7), mindestens ein angetriebenes Rad (5), mindestens ein gezogenes Rad (6) und eine Steuereinheit (8) zur Steuerung der Bergung des Fahrzeugs (1) nach dem Verfahren zum Bergen des Fahrzeugs (1) bei verminderten Haftungsverhältnissen des Geländes (2) nach einem der vorhergehenden Ansprüche umfasst, wobei die Antriebseinheit (7) mit der Steuereinheit (8) datenverbunden ist.
